# EUROPÄISCHE PATENTANMELDUNG

(11) **EP 1 069 092 A1**
(43) Veröffentlichungstag der Anmeldung: **17.01.2001**
(21) Anmeldenummer: 00890172.0
(22) Anmeldetag: 30.05.2000
(51) Int. Cl.: C04B 28/18, C04B 28/02

(54) **Spezialmörtel zur Feuchtigkeitsabdichtung**

(30) Priorität: 08.06.1999 AT 101299
(71) Anmelder: Sigmund, Hermann, 2801 Eichbüchl (AT)
(72) Erfinder: Sigmund, Hermann, 2801 Eichbüchl (AT)
(74) Vertreter: Atzwanger, Richard, Dipl.-Ing. Patentanwalt

(57) **Zusammenfassung**

Spezialmörtel auf Zementbasis zur Feuchtigkeitsabdichtung, der im wesentlichen aus Zement, Kalk [CaCO₃], latent-hydraulischem Zusatzstoff und Erstarrungsbeschleuniger, gegebenenfalls mit einem Gehalt an neutralem Zuschlag, besteht. Dieser Spezialmörtel ist besonders gut geeignet, um bei der Sanierung von feuchtem Mauerwerk, das in einem Trockenverfahren durchnitten wurde, eine horizontale Isolierschichte einzubringen. Auch bei der Verwendung als Vertikalabdichtung verhindert er das seitliche Eindringen von Feuchtigkeit.

## Beschreibung

Die gegenständliche Erfindung betrifft einen Spezialmörtel auf Zementbasis zur horizontalen und vertikalen Feuchtigkeitsabdichtung, insbesondere zur Trockenlegung von feuchtem Mauerwerk.

Bei allen bisher bekannten Verfahren zur Mauertrockenlegung, bei denen eine wasserundurchlässige Schichte horizontal in das Mauerwerk eingelassen wird, wird das zu sanierende Objekt mittels eines Naßschneideverfahrens durchschnitten, d.h. es erfolgt eine horizontale Mauerdurchtrennung, bei welcher die entstehende Wärme durch Wasser abgeleitet wird. Durch die Anwendung dieses Naßschneideverfahrens wird automatisch immer unerwünschte gebäudeschädigende Feuchtigkeit in das bereits feuchte Mauerwerk eingebracht.

Im Anschluß an einen solchen Naßschnitt erfolgt bei der erwähnten Art der Mauertrockenlegung der Einbau einer Sperrschichte, wobei Abdichtungsmaterialien auf Basis von Kunststoff, Plastomerbitumen oder Stahlblech eingesetzt werden. Der Einbau solcher Fremdkörper ohne Materialkonformität ist vor allem vom denkmalpflegerischen Standpunkt her abzulehnen, da die Herstellung eines unverfälschten Zustands nicht gewährleistet werden kann.

Im Anschluß an eine solche Horizontalisolierung wird bei den derzeitigen Verfahren vertikal ein herkömmlicher Verputz aufgetragen. Ein Aufsteigen der Feuchtigkeit über diesen Außenputz und somit die Bildung von Feuchtebrücken kann bei solchen Verfahren nicht verhindert werden.

Ein Spezialmörtel zur horizontalen ebenso wie zur vertikalen Feuchtigkeitsabdichtung, der keinen Fremdkörper im zu sanierenden Mauerwerk darstellt, ist erfindungsgemäß dadurch gekennzeichnet, daß er aus Zement, Kalk (CaCO₃), latent-hydraulischem Zusatzstoff und Erstarrungsbeschleuniger besteht. Bevorzugt enthält der Spezialmörtel 20 bis 30 Gew.% Zement, 40 bis 50 Gew.% Kalk, 25 bis 35 Gew.% latent-hydraulischen Zusatzstoff und 0,4 bis 0,6 Gew.% Erstarrungsbeschleuniger sowie gegebenenfalls einem neutralen Zuschlag.

Beim erfindungsgemäßen Spezialmörtel handelt es sich um ein schnellabbindendes hydraulisches Mörtelsystem, welches mit dem bestehenden Mauerwerk aufgrund seiner silikatischen Struktur materialkonform ist. Daher wird bei einer Mauertrockenlegung mit diesem Spezialmörtel auch in denkmalpflegerischer Hinsicht ein optimales Ergebnis erzielt. Die Feuchtigkeitsisolierung wird sowohl in der horizontalen Schichte als auch vertikal im Außenputz erreicht.

Am besten geeignet ist der erfindungsggemäße Spezialmörtel im Zusammenhang mit einem Trockenschneideverfahren, bei welchen keine zusätzliche gebäudeschädigende Nässe in das Mauerwerk eingetragen wird.

Neben hohen Anfangs- und Endfestigkeiten weist der erfindungsgemäße Spezialmörtel nach dem Abbinden ein vernachlässigbar geringes kapillares Saugverhalten auf, wodurch die erwähnte hohe Sperrwirkung erzielt wird. Die ausgezeichnete Festigkeit und Dichte wird durch die chemische Zusammensetzung und durch eine Torkretierung bei der Einbringung erzielt.

Der Einfachheit halber läßt sich der erfindungsgemäße Spezialmörtel auch so definieren, daß er aus 65 bis 75 Gew.% Schnellzement, 25-35 Gew.% latent-hydraulischem Zusatzstoff und 0,4 bis 0,6 Gew.% Erstarrungsbeschleuniger besteht.

Unter Schnellzement wird hier im wesentlichen ein Zement mit einem besonders hohen Anteil an Calciumcarbonat verstanden. In der Regel enthält der Schnellzement 60 - 70 % Calciumcarbonat. Im Schnellzement liegen die Bestandteile SiO₂ und Al₂0₃ vorzugsweise in einem Verhältnis von (1,4-1,6):1 vor. Neutrale Zuschläge, wie Quarzsand, können auch in diesem Schnellzement enthalten sein.
Insgesamt weist der Schnellzement bevorzugt folgende chemische Analyse auf:

| | |
|---|---|
| SiO₂ | 9-11 % |
| Al₂O₃ | 6-8 % |
| Fe₂O₃ | 3-4 % |
| MgO | 1,0-1,6 % |
| CacO₃ | 60-75 % |
| CaO | 4-6 % |
| SO₃ | 1,5-2,5 % |
| K₂O | 0,5-0,7 % |
| Cl | < 0,02 % |

Der latent-hydraulische Zusatzstoff weist bevorzugt folgende chemische Analyse auf:

| | |
|---|---|
| SiO₂ | 45-55 % |
| Al₂O₃ | 15-25 % |
| Fe₂O₃ | 8-12 % |
| MgO | 1,0-1,6 % |
| CacO₃ | 10-18 % |
| CaO | < 1 % |
| SO₃ | 0,1-0,3 % |
| K₂O | 4,0-4,6 % |
| Na₂O | 2,2-3,0 % |
| Cl | < 0,02 % |

Als sehr günstiger latent hydraulischer Zusatzstoff haben sich gemahlener Tuffstein (Trachyttuff), Trass und Puzzolan erwiesen.

Erstarrungsbeschleuniger sind an sich bekannt. Vorteilhaft weist ein solcher erfindungsgemäß einzusetzender Erstarrungsbeschleuniger folgende chemische Analyse auf:

| | |
|---|---|
| SiO₂ | 0,8-1,2 % |
| Al₂O₃ | 4-6 % |
| Fe₂O₃ | 0,2-0,4 % |
| MgO | 0,05-1,5 % |
| CaCO₃ | 80-90 % |
| CaO | 5-7 % |
| SO₃ | < 0,1 |
| K₂O | < 0,1 % |
| Na₂O | 3,5-4,5 % |
| Chlorid | < 0,02 % |

Erstarrungsbeschleuniger dieser Art beruhen weitgehend auf der Basis von Calciumcarbonat, wodurch eine hohe Alkalinität erzielt wird. Der Aluminatanteil bewirkt ein rasches Starten der Calciumaluminat- und Calciumsilikatbildung.
In manchen Fällen ist es günstig, wenn der Spezialmörtel zusätzlich noch ein an sich bekanntes Hydrophobierungsmittel enthält.

Im wesentlichen hat das Spezialmörtelsystem als Ganzes folgende chemische Zusammensetzung, gemessen durch Röntgenfluoreszenz-Analyse:

| | |
|---|---|
| SiO₂ | 20-26 % |
| Al₂O₃ | 10-14% |
| CaCO₃ | 45-55 % |
| MgCO₃ | 0,8-1,2 % |
| Fe₂O₃ | 5-7 % |
| SO₃ | 0,5-0,9 % |
| K₂O | 2,5-3,5 % |
| Na₂O | 1,5-2,5 % |
| Chlorid | < 0,02 % |

Mit einem solchen erfindungsgemäßen Spezialmörtel ergibt sich bevorzugt eine Sperrschichte mit folgender Zusammensetzung:

| | |
|---|---|
| SiO₂ | 18-25 % |
| Al₂O₃ | 8-15 % |
| CaCO₃ | 50-65 % |
| CaO | 0,5-2 % |
| MgCO₃ | 0,2-1 % |
| Fe₂O₃ | 4-6 % |
| SO₃ | 0,2-0,9 % |
| K₂O | 0,5-3,5 % |
| Na₂O | 0,2-2 % |
| Chlorid | < 0,02 % |

### Mechanische und chemische Prüfergebnisse

Aus einem erfindungsgemäßen Spezialmörtel mit folgender Zusammensetzung:

| | |
|---|---|
| SiO₂ | 23 % |
| Al₂O₃ | 12 % |
| CaCO₃ | 51 % |
| MgCO₃ | 1 % |
| Fe₂O₃ | 6 % |
| SO₃ | 0,7 % |
| K₂O | 3 % |
| Na₂O | 2 % |
| Chlorid | < 0,02 % |

wurden Mörtelprismen mit den Dimensionen 4x4x16 cm hergestellt und auf Druck- und Biegezugfestigkeit 1 Stunde nach der Herstellung, 7 Tage nach der Herstellung, 28 Tage nach der Herstellung, und hinsichtich der kapillaren Eindringtiefe sowie der Chlorid-, Sulfat- und Nitratbelastung untersucht.

Die Prüfkörper wurden im Torkretspritzverfahren mit einem Druck von 30 bar in die Prismenformen eingebracht.

### Druck- und Biegzugfestigkeit der Mörtelprismen

Die Druck- und Biegezugfestigkeiten wurden gemäß ÖNORM B 3310 in einer 100 kN Prüfmaschine (Zwick 1474, L.Nr. 289) un in einer 3000 kN Prüfmaschine (Seidner, L.Nr. 416) ermittelt. Das Prüfklima betrug 23°C/50 % r.F.

In der folgenden Tabelle sind die Prüfergebnisse zusammengestellt.

| Festigkeit | Prüfdatum/Stunden bzw. Tage n.d.Herstellung | | |
|---|---|---|---|
| | 1 St. | 7 Tage | 28 Tage |
| Druckfestigkeit (Mittelwerte) N/mm² | 14,97 | 25,79 | 42,20 |
| Biegzugfestigkeit (Mittelwerte) N/mm² | 3,04 | 5,09 | 6,82 |

### Kapillare Wassereindringtiefe

Ein wie oben hergestelltes Mörtelprisma wurde in eine wässerige Phenolphthaleinlösung eingetaucht, wobei die Eintauchtiefe 2 cm betrug und die Flüssigkeitsverdunstung mittels einer Abdeckung aus Aluminiumfolie unterbunden wurde. Nach achtwöchiger Lagrung wurde die Eindringtiefe im Bereich einer Bruchfläche gemessen.
Die kapillare Wassereindringtiefe beträgt maximal 1 mm.

### Bestimmung der bauschädlichen Salze

Folgende Werte wurden gemäß der Standardarbeitsanweisung 6002 des Österreichichen Bauinstituts gemäß ÖNORM B 3355 ermittelt:
- Chloridbelastung (Anionenkonzentration in Masse-%)
- Nitratbelastung (Anionenkonzentration in Masse-%)
- pH-Wert

Folgende Prüfergebnisse wurden ermittelt:

| | |
|---|---|
| Chloride | 0,008 Masse-% |
| Sulfate | 0,008 Masse-% |
| Nitrate | 0,001 Masse-% |
| pH-Wert | 11,3 |

Aufgrund der erzielten Prüfergebnisse kann ausgesagt werden, daß es sich bei dem erfindungsgemäßen Mörtelsystem um ein schnell erhärtendes Produkt mit hohen Anfangs- und Endfestigkeiten handelt, dessen kapillares Saugverhalten vernachlässigbar gering ist. Somit ist dieser Mörtel für Abdichtungszwecke bestens geeignet. Da die Salzbelastung sehr gering ist, erfolgt auch kein Salzeintrag in angrenzende Bauteile und eine eventuelle künftige Mauerfeuchte infolge Hygroskopizität von Salzen wird verhindert.

Im folgenden wird noch ein weiteres Beispiel für die Bestandteile und die Zusammensetzung eines erfindungsgemäßen Spezialmörtels angegeben:

| | Schnellzement | Tuffstein (gemahlen) | Erstarrungsbeschleuniger | Sperrschichte |
|---|---|---|---|---|
| Glühverlust (%) | 31,3 | 7,9 | 36 | 23 |
| SiO₂ (%) | 10 | 51 | 1,0 | 23 |
| Al₂O₃ (%) | 7 | 19 | 5 | 12 |
| Fe₂O₃ (%) | 3,5 | 10 | 0,3 | 6 |
| MgO (%) | 1,3 | 1,3 | 0,1 | 0,7 |
| CaCO₃ (%) | 68 | 14 | 84 | 50 |
| CaO (%) | 5 | < 1 | 6 | 1 |
| SO₃ (%) | 2 | 0,2 | < 0,1 | 0,7 |
| K₂O (%) | 0,6 | 4,3 | < 0,1 | 2,9 |
| Na₂O (%) | n.d. | 2,6 | 3,9 | 1,7 |
| Cl (%) | < 0,02 | < 0,02 | < 0,02 | < 0,02 |

Die Bestandteile Schnellzement, gemahlener Tuff und Erstarrungsbeschleuniger werden im Mengenverhältnis 30 kg Schnellzement, 12,7 kg Tuff und 0,2 kg Erstarrungsbeschleuniger gemischt und ergeben nach dem Abbinden mit Wasser eine Sperrschichte mit der oben genannten Zusammensetzung.

## Patentansprüche

1. Spezialmörtel auf Zementbasis zur horizontalen und vertikalen Feuchtigkeitsabdichtung, dadurch gekennzeichnet, daß er im wesentlichen aus Zement, Kalk (CaCO₃), latent-hydraulischem Zusatzstoff und Erstarrungsbeschleuniger, gegebenenfalls mit einem Gehalt an neutralem Zuschlag, besteht.

2. Spezialmörtel nach Anspruch 1, dadurch gekennzeichnet, daß er 20 bis 30 Gew.% Zement, 40 bis 50 Gew.% Kalk, 25 bis 35 Gew.% latent-hydraulischen Zusatzstoff und 0,4 bis 0,6 Gew.% Erstarrungsbeschleuniger enthält.

3. Spezialmörtel nach Anspruch 1 oder 2, dadurch gekennzeichnet, daß er aus 65 bis 75 Gew.% Schnellzement, 25-35 Gew.% latent-hydraulischem Zusatzstoff und 0,4 bis 0,6 Gew.% Erstarrungsbeschleuniger besteht.

4. Spezialmörtel nach einem der Ansprüche 1 bis 3, dadurch gekennzeichnet, daß im Schnellzement SiO₂ und Al₂O₃ in einem Verhältnis von (1,4-1,6):1 vorliegen.

5. Spezialmörtel nach einem der Ansprüche 1 bis 4, dadurch gekennzeichnet, daß der Schnellzement 60 bis 70 % Calciumcarbonat enthält.

6. Spezialmörtel nach einem der Ansprüche 1 bis 5, dadurch gekennzeichnet, daß der Schnellzement folgende chemische Analyse aufweist:
| | |
|---|---|
| SiO₂ | 9-11 % |
| Al₂O₃ | 6-8 % |
| Fe₂O₃ | 3-4 % |
| MgO | 1,0-1,6 % |
| CacO₃ | 60-75 % |
| CaO | 4-6 % |
| SO₃ | 1,5-2,5 % |
| K₂O | 0,5-0,7 % |
| Cl | < 0,02 % |

7. Spezialmörtel nach einem der Ansprüche 1 bis 6, dadurch gekennzeichnet, daß der latent-hydraulische Zusatzstoff folgende chemische Analyse aufweist:
| | |
|---|---|
| SiO₂ | 45-55 % |
| Al₂O₃ | 15-25 % |
| Fe₂O₃ | 8-12 % |
| MgO | 1,0-1,6 % |
| CacO₃ | 10-18 % |
| CaO | < 1 % |
| SO₃ | 0,1-0,3 % |
| K₂O | 4,0-4,6 % |
| Na₂O | 2,2-3,0 |
| Cl | < 0,02 % |

8. Spezialmörtel nach einem der Ansprüche 1 bis 7, dadurch gekennzeichnet, daß der latent hydraulische Zusatzstoff aus gemahlenem Tuffstein (Trachyttuff), Trass oder Puzzolan besteht.

9. Spezialmörtel nach einem der Ansprüche 1 bis 8, dadurch gekennzeichnet, daß der Erstarrungsbeschleuniger folgende chemische Analyse aufweist:
| | |
|---|---|
| SiO₂ | 0,8-1,2 % |
| Al₂O₃ | 4-6 % |
| Fe₂O₃ | 0,2-0,4 % |
| MgO | 0,05-1,5 % |
| CaCO₃ | 80-90 % |
| CaO | 5-7 % |
| SO₃ | < 0,1 |
| K₂O | < 0,1 % |
| Na₂O | 3,5-4,5 % |
| Chlorid | < 0,02 % |

10. Spezialmörtel nach einem der Ansprüche 1 bis 9, dadurch gekennzeichnet, daß er ein an sich bekanntes Hydrophobierungsmittel enthält.

11. Spezialmörtel nach einem der Ansprüche 1 bis 10, dadurch gekennzeichnet, daß er folgende Gesamtzusammensetzung hat:
| | |
|---|---|
| SiO₂ | 20-26 % |
| Al₂O₃ | 10-14% |
| CaCO₃ | 45-55 % |
| MgCO₃ | 0,8-1,2 % |
| Fe₂O₃ | 5-7 % |
| SO₃ | 0,5-0,9 % |
| K₂O | 2,5-3,5 % |
| Na₂O | 1,5-2,5 % |
| Chlorid | < 0,02 % |

12. Spezialmörtel nach einem der Ansprüche 1 bis 11, dadurch gekennzeichnet, daß er eine Sperrschicht mit folgender Zusammensetzung ergibt:
| | |
|---|---|
| SiO₂ | 18-25 % |
| SiO₂ | 8-15 % |
| CaCO₃ | 50-65 % |
| CaO | 0,5-2 % |
| MgCO₃ | 0,2-1 % |
| Fe₂O₃ | 4-6 % |
| SO₃ | 0,2-0,9 % |
| K₂O | 0,5-3,5 % |
| Na₂O | 0,2-2 % |
| Chlorid | < 0,02 % |
